(19) Europäisches Patentamt
European Patent Office
Office européen des brevets

(11) **EP 4 678 466 A1**

(12) **EUROPEAN PATENT APPLICATION**

(43) Date of publication:
**14.01.2026 Bulletin 2026/03**

(21) Application number: **25187508.4**

(22) Date of filing: **04.07.2025**

(51) International Patent Classification (IPC):
**B60L 58/24** (2019.01)    **B60L 58/26** (2019.01)
**H01M 10/60** (2014.01)    **H01M 10/613** (2014.01)
**H01M 10/625** (2014.01)    **H01M 10/633** (2014.01)

(52) Cooperative Patent Classification (CPC):
**B60L 58/24; B60L 58/26; H01M 10/48;
H01M 10/613; H01M 10/625; H01M 10/633;
B60L 58/12; B60L 58/16; B60L 2240/545**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.07.2024 EP 24187731**

(71) Applicant: **Volvo Truck Corporation
405 08 Göteborg (SE)**

(72) Inventors:
• **VEDULLA, Leela Krishna
GÖTEBORG (SE)**
• **AL MOUATAMID, Faouzi
GÖTEBORG (SE)**

(74) Representative: **Ström & Gulliksson AB
P.O. Box 4188
203 13 Malmö (SE)**

(54) **TEMPERATURE MANAGEMENT FOR BATTERIES**

(57)    A computer system is disclosed for determining a target operating temperature for a battery, the computer system comprising processing circuitry configured to determine a first cost associated with a resistance of the battery, determine a second cost associated with a life expectancy of the battery, and determine a target operating temperature for the battery such that a sum of the first and second costs is below a threshold, wherein the first cost comprises a third cost associated with one or more of increasing a discharge power of the battery and decreasing a charging time of the battery. A computer-implemented method for determining a target operating temperature for a battery is also disclosed.

200

FIG. 2

Description

TECHNICAL FIELD

The disclosure relates generally to batteries. In particular aspects, the disclosure relates to temperature management for batteries. The disclosure can be applied in heavy-duty vehicles, such as trucks, buses, multi-unit vehicle combinations, and construction equipment. The disclosure can also be applied to marine vessels, such as water crafts, motorboats, work boats, sport vessels, boats, ships, among other vessel types. The disclosure can also be applied to test environments for batteries. Although the disclosure may be described with respect to a particular implementation, the disclosure is not restricted to any particular implementation. The disclosure can also be applied to other systems such as industrial systems and static systems.

BACKGROUND

Electrical systems such as electric vehicles are often powered from a battery, such as a battery pack comprising a number of battery cells. Dependent on operating conditions, such as load, ambient temperature, and the like, such batteries can reach high temperatures that may affect operation of the batteries and, in some cases, reach dangerous temperatures that may have adverse effects on other components of the vehicle.

To remedy this, many electrical vehicles comprise some sort of cooling to keep the battery at low temperatures to increase the health and therefore lifespan of the battery. These cooling systems usually have a fixed set point for the target temperature of the battery. However, these solutions do not take into account how temperature management affects other aspects of battery performance.

It is therefore desired to provide systems, methods and other approaches that attempt to resolve or at least mitigate one or more of these issues.

SUMMARY

This disclosure provides systems, methods and other approaches for temperature management of batteries that balances energy efficiency, battery health, and power. In particular, it is proposed to determine a target operating temperature for a battery by minimising a cumulative cost of resistance and life expectancy of the battery. Determining a target operating temperature in this way may reduce energy losses inside the battery and reduce charging time, while considering the health of the battery, energy efficiency of the vehicle, and output power of the battery. This provides a predictive solution for finding an optimal target battery temperature that can be based on current operating conditions.

According to a first aspect of the disclosure, there is provided a computer system for determining a target operating temperature for a battery, the computer system comprising processing circuitry configured to: determine a first cost associated with a resistance of the battery, determine a second cost associated with a life expectancy of the battery; and determine a target operating temperature for the battery such that a sum of the first and second costs is below a threshold, wherein the first cost comprises a third cost associated with one or more of discharge power of the battery and a charging time of the battery.

The first aspect of the disclosure may seek to provide a computer system capable of determining a target operating temperature for a battery that balances energy efficiency, battery health, and power. In particular, a target operating temperature may be set that takes into account factors associated with the resistance of the battery, such as energy losses inside the battery, charging time, output power of the battery, and energy efficiency of the battery and associated components, whilst also considering battery health and longevity. In particular, a desire to increase discharge power and/or decrease charging time can be taken into account appropriately when determining a target operating temperature for a battery, allowing these parameters to be optimised. This is useful in situations where reducing charging/discharging time must be prioritised, and in some instances may be performed at the expense of increased power losses and/or reduced battery life.

Optionally in some examples, including in at least one preferred example, the first cost comprises a fourth cost associated with energy efficiency associated with the battery. A technical benefit may include that energy efficiency may be specifically taken into account when determining the target operating temperature.

Optionally in some examples, including in at least one preferred example, the fourth cost comprises one or more of a fifth cost associated with energy losses associated with the battery and a sixth cost associated with energy consumption of a cooling system associated with the battery. A technical benefit may include that energy losses and energy consumption of a cooling system may be specifically taken into account when determining the target operating temperature.

Optionally in some examples, including in at least one preferred example, the processing circuitry is configured to determine the fifth cost by modelling energy losses associated with the battery as a function of one or more of battery temperature and battery power. A technical benefit may include that energy losses may be modelled more accurately and with a causal relationship to the temperature of the battery, enabling the target operating temperature to be determined in a more appropriate manner.

Optionally in some examples, including in at least one preferred example, the processing circuitry is configured to determine the sixth cost by modelling energy consumption of the cooling system as a function of target battery temperature. A technical benefit may include that energy consumption of the cooling system may be modelled with a causal relationship to the temperature of the battery, enabling the target operating temperature to be determined in a more appropriate manner.

Optionally in some examples, including in at least one preferred example, the processing circuitry is configured to perform the modelling based on current operating conditions of one or more of the battery and a vehicle comprising the battery. A technical benefit may include that costs may be modelled based on accurate and up to date conditions of the battery, enabling the target operating temperature to be determined in a more appropriate manner.

Optionally in some examples, including in at least one preferred example, the processing circuitry is configured to determine the third cost by modelling at least one of the open circuit voltage (OCV) of the battery and the resistance of the battery as a function of battery temperature and SoC. A technical benefit may include that discharge power and/or charging time may be modelled with a causal relationship to the temperature of the battery and the SoC, enabling the target operating temperature to be determined in a more appropriate manner.

Optionally in some examples, including in at least one preferred example, the processing circuitry is configured to determine the third cost by using test data for the resistance of the battery as function of temperature and optionally using test data for one or more of a minimum and a maximum voltage limit. A technical benefit may include that discharge power and/or charging time may be modelled in a more robust fashion based on observed behaviour of the battery.

Optionally in some examples, including in at least one preferred example, the processing circuitry is configured to determine the second cost by using test data for life expectancy of the battery as a function of one or more of battery temperature and a present condition of the battery. A technical benefit may include that life expectancy of the battery may be modelled in a more robust fashion based on observed behaviour of the battery and current battery conditions.

Optionally in some examples, including in at least one preferred example, the processing circuitry is configured to determine the target operating temperature using model predictive control or an optimisation function. A technical benefit may include that the target operating temperature may be determined in a robust and accurate manner.

Optionally in some examples, including in at least one preferred example, the processing circuitry is configured to determine the target operating temperature by minimising the sum of the first and second costs. A technical benefit may include that the target operating temperature may be determined in an optimal manner.

According to a second aspect of the disclosure, there is provided a vehicle comprising the computer system of any preceding claim. The second aspect of the disclosure may seek to provide a vehicle capable of determining a target operating temperature for a battery that balances energy efficiency, battery health, discharge power, and/or charging time.

According to a third aspect of the disclosure, there is provided a computer-implemented method for determining a target operating temperature for a battery, the computer-implemented method comprising: determining, by processing circuitry of a computer system, a first cost associated with a resistance of the battery, determining, by the processing circuitry, a second cost associated with a life expectancy of the battery, and determining, by the processing circuitry, a target operating temperature for the battery such that a sum of the first and second costs is below a threshold, wherein the first cost comprises a third cost associated with one or more of discharge power of the battery and a charging time of the battery.

The third aspect of the disclosure may seek to provide a computer system capable of determining a target operating temperature for a battery that balances energy efficiency, battery health, and power. In particular, a target operating temperature may be set that takes into account factors associated with the resistance of the battery, such as energy losses inside the battery, charging time, output power of the battery, and energy efficiency of the battery and associated components, whilst also considering battery health and longevity. In particular, a desire to increase discharge power and/or decrease charging time can be taken into account appropriately when determining a target operating temperature for a battery, allowing these parameters to be optimised. This is useful in situations where reducing charging/discharging time must be prioritised, and in some instances may be performed at the expense of increased power losses and/or reduced battery life.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to determine a target operating temperature for a battery that balances energy efficiency, battery health, and power.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to determine a target operating temperature for a battery that balances energy efficiency, battery health, and power.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is an exemplary view of a vehicle according to an example.
FIG. 2 is a flow chart of an example method for determining a target operating temperature for a battery.
FIG. 3 is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

Batteries for electric vehicles can reach high temperatures that may affect operation of the batteries and, in some cases, reach dangerous temperatures that may have adverse effects on other components of the vehicle. Cooling systems are often provided to keep the battery at low temperatures to increase the health and therefore lifespan of the battery. However, these solutions do not take into account how temperature management affects other aspects of battery performance, such as energy efficiency and power delivery. For example, at low temperatures, while battery health may be improved, the battery has a higher resistance, which increases energy losses in the battery and reduces power delivery and charging speed. Furthermore, a cooling system requires more energy to achieve and maintain a low target temperature. Therefore, the battery health advantages of a low temperature are diminished by poor energy efficiency and reduced performance.

To remedy this, systems, methods and other approaches are provided for temperature management of batteries that balances energy efficiency, battery health, and power. In particular, it is proposed to determine a target operating temperature for a battery by minimising a cumulative cost of resistance and life expectancy of the battery, where increasing discharge power and decreasing a charging time of the battery can be specifically taken into account. Determining a target operating temperature in this way may reduce energy losses inside the battery and reduce charging time, while considering the health of the battery, energy efficiency of the vehicle, and output power of the battery. In particular, optimal charging or discharging of the battery can be provided, which is useful in situations where reducing charging/-discharging time must be prioritised. This provides a predictive solution for finding an optimal target battery temperature that can be based on current operating conditions.

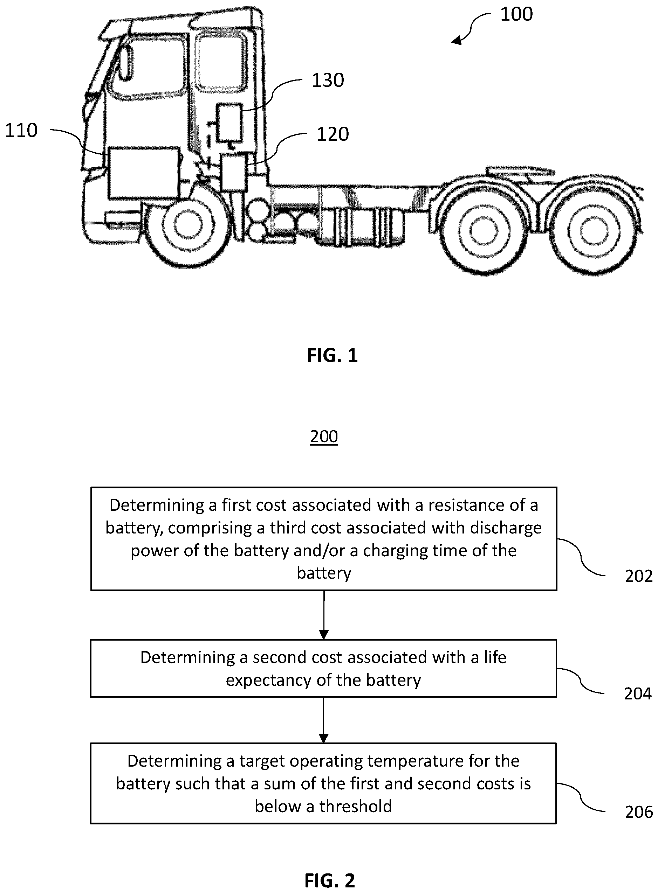

FIG. 1 is an exemplary view of a vehicle 100. Whilst the vehicle shown is a truck, the present disclosure is applicable to any suitable type of vehicle, such as buses, multi-unit vehicle combinations, construction equipment, and marine vessel, The present disclosure is also applicable to any type of battery system, not only battery systems for vehicles.

The vehicle 100 of FIG. 1 is an at least partly electrically propelled vehicle 100. To this end, the vehicle 100 comprises one or more motors 110 arranged to propel the vehicle 100 and one or more electrical power sources 120 configured to provide power to the one or motors 110 and/or other functionality of the vehicle 100. In particular, the electrical power sources 120 may comprise one or more battery packs comprising a number of battery cells. A cooling system (not shown) may be associated with the one or more electrical power sources 120 in order to regulate the temperature of the one or more electrical power sources 120. The vehicle further comprises a battery management unit (BMU) 130 arranged to monitor, control and/or manage various aspects of the operation of the electrical power sources 120 ensure the optimal performance, longevity, and safety of the electrical power sources 120. The BMU 130 may be implemented, for example, as code running on a processing circuitry, or similar. The BMU 130 may comprise processing circuitry configured to implement various operations disclosed below. The BMU 130 may include a memory storing instructions that, when executed by the processing circuitry, cause the processing circuitry to perform the various operations. The electrical power sources 120 and/or BMU 130 may be part of an energy storage system (ESS) of the vehicle 100 or of any suitable vehicle, industrial system or static system.

Although the vehicle **100 of FIG. 1** is described as an at least partly electrically propelled vehicle **100,** the vehicle **100** may, in some examples, be a vehicle **100** propelled solely by an internal combustion engine. In such examples, electrical power sources **120** may be used to power electronics controlling the internal combustion engine (fuel injection, etc.) or other systems of the vehicle (thermal control of a cabin of the vehicle, auxiliary equipment such as refrigerators, GPS etc.). In short, the BMU **130** may be utilized with any suitable electrical power source **120.**

The temperature at which the electrical power sources **120** operate can have various effects on different parameters of their operation. These include battery life, power delivery capability (and, in charging operations, charging time), energy losses from the battery, and energy consumption from a cooling system associated with the battery.

In a first example, a high battery temperature can cause a reduction in the life expectancy of the battery. For example, high temperatures can accelerate the chemical reactions inside a battery, leading to faster degradation of the electrolyte and other components. Furthermore, prolonged exposure to high temperatures can cause capacity fade, meaning the battery will lose its ability to hold a charge over time. This results in a shorter overall lifespan of the batter.

In a second example, a higher battery temperature can cause an increase in the power delivery and/or a decrease in the charging time of the battery. Higher temperatures can decrease the internal resistance of the battery, allowing for better conductivity and higher power output. This also applies to charging of the battery, which can be performed at a higher rate. In this context, power delivery and charging can be considered as opposite energy flows where temperature has the same effect in both directions (i.e. an increase in power delivery is analogous to decreasing a discharge time, and decrease in charging time is analogous to an increase in charging power). At higher temperatures, the electrochemical reactions within the battery cells also occur more rapidly, which can temporarily enhance power delivery.

In a third example, a higher battery temperature can cause a decrease in the energy losses from the battery. As discussed above, higher temperatures can decrease the internal resistance of the battery. Lower resistance means less energy is lost as heat during the charge and discharge cycles.

In a fourth example, keeping the battery at lower temperatures can cause an increase in the energy consumption of a cooling system associated with the battery. For example, in applications where the battery is operated to deliver high power, additional energy is required for a cooling systems to reduce the temperature of the battery and maintain safe operating conditions. The energy consumption of a cooling system is dependent on the resistance of the battery, as will be discussed below.

In view of the above, it can be seen that thermal management of a battery is not as simply as merely maintaining a low temperature to extend battery life. Instead, thermal conditions of a battery need to be carefully managed in order to balance the various concerns at issue, including energy efficiency, battery performance, and battery lifespan.

The present disclosure provides a method for temperature management of batteries that balances energy efficiency, battery health, and power. In particular, it is proposed to determine a target operating temperature for a battery by minimising a cumulative cost of resistance and life expectancy of the battery. As discussed above, there are four principal costs that are considered: a cost associated with life expectancy of the battery, a cost associated with power delivery and/or charging time of the battery, a cost associated with energy losses from the battery, and a cost associated with the energy consumption of a cooling system associated with the battery. Each of these costs is dependent on the temperature of the battery and may be modelled as such. Each cost can be determined based on current operating conditions of the battery, such as SoC of the battery, the ambient temperature, and the thermal resistance between the battery and the ambient environment. In this way, a target operating temperature can be determined that balances the different considerations at issue. As discussed above, the cost associated with power delivery and/or charging time of the battery and the cost associated with energy losses from the battery are dependent on the internal resistance of the battery, and can therefore be considered collectively as a cost associated with a resistance of the battery. The cost associated with energy losses from the battery and the cost associated with the energy consumption of a cooling system associated with the battery can be considered collectively as a cost associated with energy efficiency.

FIG. 2 is a flow chart of a computer-implemented method **200** according to an example. The method **200** is for determining a target operating temperature for a battery, for example in the electrical power sources **120. In** the method **200,** a battery may be a battery pack or a battery cell. The method **200** may be implemented by processing circuitry of a computer system (e.g., the BMU **130** described in relation to **FIG. 1** or other controller of an energy storage system (ESS) of a vehicle).

At **202,** a first cost associated with a resistance of a battery is determined. As discussed above, the resistance of the battery may affect the power delivery and/or charging time of the battery and/or the energy losses from the battery, and/or the energy consumption of a cooling system. As such, the first cost comprises a cost associated with one or more of increasing discharge power of the battery and decreasing a charging time of the battery. It will be appreciated that this is analogous to decreasing a discharge time of the battery and/or increasing a charging power of the battery. The first cost may also be considered to comprise a cost associated with energy efficiency associated with the battery. The cost associated with energy efficiency may be considered to comprise a cost associated with energy losses from the battery and/or a cost associated with energy consumption of a cooling system associated with the battery.

To determine the cost associated with increasing discharge power of the battery and/or decreasing a charging time, the open circuit voltage, *OCV,* and/or resistance of the battery may be modelled as a function of battery temperature and SoC. To achieve this, the cost can be formulated based on a simplified cell model defined as follows:

$$i(t) = \frac{OCV(z(t), T) - v(t)}{R(z(t), T)} \qquad (1)$$

where *i* is current, *z* is the battery SoC, T is the battery temperature, *v* is the voltage limit to which the battery can be charged or discharged, R is the battery resistance, and t is time. The voltage limit *v* may be a minimum voltage $v_{min}$ when calculating discharging power, or a maximum voltage $v_{max}$ when calculating charging power. The values $v_{min}$ and $v_{max}$ can be determined as known in the art, for example via experimental testing.

The charging/discharging power $P_{chg}$ of the battery can then be determined as follows:

$$P_{chg} = v(t)i(t) = v_{max} \frac{OCV(z(t), T) - v_{max}}{R_{chg}(z(t), T)} \qquad (2)$$

where $R_{chg}$ is the resistance during charging. This quantity is negative, but the absolute value can be taken should a positive report be required.

The discharging power $P_{dis}$ of the battery can be determined as follows:

$$P_{dis} = v(t)i(t) = v_{min} \frac{OCV(z(t), T) - v_{min}}{R_{dis}(z(t), T)} \qquad (3)$$

where $R_{dis}$ is the resistance during discharging. This quantity is negative, but the absolute value can be taken should a positive report be required.

In some examples, the resistance may be determined based on test data for the resistance of the battery as function of temperature and SoC. For example, at the beginning of life a battery cell may be tested at different temperatures and a relationship between resistance, OCV, and temperature can be established based on measurements. During implementation, for example in a vehicle, models known in the art can be used to estimate the resistance at different temperatures online. In turn, the discharge power of the battery and/or charging time may be modelled. For example, the charge or discharge current of the battery can be determined as a function of the resistance (which is a function of temperature), as known in the art. These currents can then be used to model the discharge power or charging time. For example, a current level of charge of the battery can be used with the determined charging current to determine the charging time at a given temperature.

The cost associated with energy losses from the battery may be determined by modelling energy losses associated with the battery as a function of one or more of battery temperature and battery power (charge or discharge). Power losses, for example, can be estimated using the I2R law, which gives losses as a function of current and resistance (and therefore temperature). This can be used to determine energy losses over time. This modelling may be performed based on current operating conditions of the battery, such as SoC of the battery, and/or a vehicle comprising the battery.

The cost associated with energy consumption of a cooling system may be determined by modelling energy consumption of the cooling system as a function of battery temperature. For example, a thermal model of the battery cooling system may be provided and used to model behaviour of the cooling system at different temperatures. The energy consumption of the cooling may be considered to comprise heat losses inside the battery and heat transferred to the ambient environment. The heat losses inside the battery can be estimated using the I2R law. The heat transferred to the ambient environment can be considered as the ratio between (i) the temperature difference between the battery and the ambient environment and (ii) the thermal resistance between the battery and the ambient environment. The thermal resistance may be measured in testing at different temperatures. This modelling may be performed based on current operating conditions of one or more of the battery and a vehicle comprising the battery, such as the ambient temperature.

At **204,** a second cost associated with a life expectancy of the battery is determined. The second cost may be determined using test data for life expectancy of the battery as a function of one or more of battery temperature and a present condition of the battery. For example, test data (e.g. battery life cycle models) may indicate the life expectancy of the battery for a range of given operating temperatures. This may be a total life expectancy for a new battery, or a remaining life expectancy for a partially used battery. In the latter case, the present health of the battery may be taken into account.

At **206,** a target operating temperature for the battery is determined such that a sum of the first and second costs is below a threshold. For example, the costs can be modelled for different temperatures and a temperature having the lowest total cost may be provided as the target operating temperature. The cost function may be a weighted sum of the first and second costs. The weights may be determined based on preferences or requirements of a user. For example, if it is desired to charging/discharging speed over other factors, the third cost may be given a larger weight than the other costs, which may optimize discharge power/charging time at the expense of increased power losses and reduced battery life. This enables the target operating temperature to be determined in the most appropriate manner for different scenarios and objectives.

As discussed above, the first cost associated with a resistance of a battery may comprise a fourth cost associated with energy efficiency associated with the battery. The fourth cost associated with energy efficiency may be considered to comprise one or more of a fifth cost associated with energy losses from the battery and a sixth cost associated with energy consumption of a cooling system associated with the battery. It will therefore be appreciated that the cost function may comprise any suitable combination of these costs. For example, the cost function may comprise the second, third, fifth, and sixth costs. In this way, the costs function may take into account the life expectancy of the battery, discharge power of the battery and/or a charging time of the battery, energy losses from the battery, and/or energy consumption of a cooling system associated with the battery. The cost function may be a weighted sum of the various costs. The weights may be determined based on preferences or requirements of a user. For example, if it desired to prioritise charging speed over other factors, the third cost may be given a larger weight than the other costs. This enables the target operating temperature to be determined in the most appropriate manner for different scenarios and objectives.

In some examples, the cost function may be solved such that the total cost is minimised. This may be achieved using any suitable optimisation approach or algorithm known in the art. In some examples, a model predictive controller (MPC) is used. MPC design is flexible and can be configured to meet different requirements.

Certain constraints can be applied to the optimisation. In one example, minimum and maximum operational cell temperatures can be implemented as constraints. This may ensure that the target operating temperature for the battery is always maintained between operational limits for the battery. This avoids issues such as thermal runaway (where a high temperature inside a battery leads to a chemical reaction that produces further heat, increasing the temperature, and causing further chemical reactions that create yet more heat, and so on until failure) or physical damage to the battery components due to overly low temperatures (such as the electrolyte freezing and expanding). In some examples, constraints on energy losses, battery health, and the like may also be implemented. Setting constraints on certain factors while solving a cost minimisation is a major advantage of using an MPC.

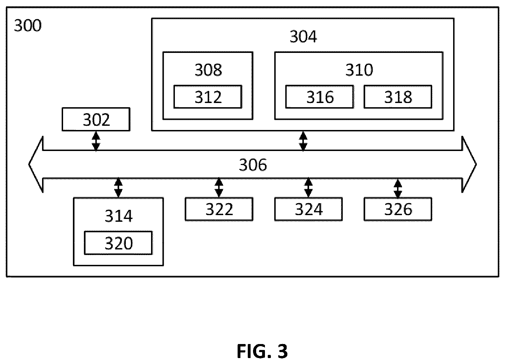

FIG. 3 is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **302** (e.g., processing circuitry including one or more processor devices or control units), a memory **304,** and a system bus **306**. The computer system **300** may include at least one computing device having the processing circuitry **302**. The system bus **306** provides an interface for system components including, but not limited to, the memory **304** and the processing circuitry **302**. The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302**. A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318**. All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302**. In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302**. The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (130, 300) for determining a target operating temperature for a battery (120), the computer system (130, 300) comprising processing circuitry (302) configured to: determine a first cost associated with a resistance of the battery (120); determine a second cost associated with a life expectancy of the battery (120); and determine a target operating temperature for the battery (120) such that a sum of the first and second costs is below a threshold; wherein the first cost comprises a third cost associated with one or more of increasing a discharge power of the battery (120) and decreasing a charging time of the battery (120).

Example 2: The computer system (130, 300) of example 1, wherein the first cost comprises a fourth cost associated with energy efficiency associated with the battery (120).

Example 3: The computer system (130, 300) of example 2, wherein the fourth cost comprises one or more of a fifth cost associated with energy losses associated with the battery (120) and a sixth cost associated with energy consumption of a cooling system associated with the battery (120).

Example 4: The computer system (130, 300) of example 3, wherein the processing circuitry (302) is configured to determine the fifth cost by modelling energy losses associated with the battery (120) as a function of one or more of battery temperature and battery power.

Example 5: The computer system (130, 300) of example 3 or 4, wherein the processing circuitry (302) is configured to determine the sixth cost by modelling energy consumption of the cooling system as a function of target battery temperature.

Example 6: The computer system (130, 300) of example 4 or 5, wherein the processing circuitry (302) is configured to perform the modelling based on current operating conditions of one or more of the battery (120) and a vehicle (100) comprising the battery (120).

Example 7: The computer system (130, 300) of any preceding example, wherein the processing circuitry (302) is configured to determine the third cost by modelling the charging power $P_{chg}$ of the battery (120) as:

$$P_{chg} = v_{max} \frac{OCV - v_{max}}{R_{chg}}$$

where $OCV$ is the open circuit voltage of the battery (120), $v_{max}$ is a maximum voltage to which the battery can be charged, and $R_{chg}$ is the resistance during charging.

Example 8: The computer system (130, 300) of any preceding example, wherein the processing circuitry (302) is configured to determine the third cost by modelling the discharging power $P_{dis}$ of the battery (120) as:

$$P_{dis} = v_{min} \frac{OCV - v_{min}}{R_{dis}}$$

where $OCV$ is the open circuit voltage of the battery (120), $v_{min}$ is a minimum voltage to which the battery can be discharged, and $R_{dis}$ is the resistance during discharging.

Example 9: The computer system (130, 300) of any preceding example, wherein the processing circuitry (302) is configured to determine the third cost by modelling at least one of the open circuit voltage of the battery (120) and the resistance of the battery (120) as a function of battery temperature and state of charge.

Example 10: The computer system (130, 300) of any preceding example, wherein the processing circuitry (302) is configured to determine the fourth cost by using test data for the resistance of the battery (120) as function of temperature and state of charge.

Example 11: The computer system (130, 300) of any preceding example, wherein the processing circuitry (302) is configured to determine the second cost by using test data for life expectancy of the battery (120) as a function of one or more of battery temperature and a present condition of the battery (120).

Example 12: The computer system (130, 300) of any preceding example, wherein the processing circuitry (302) is configured to determine the target operating temperature using model predictive control or an optimisation function.

Example 13: The computer system (130, 300) of any preceding example, wherein the processing circuitry (302) is configured to determine the target operating temperature by minimising the sum of the first and second costs.

Example 14: A vehicle (100) comprising the computer system (130, 300) of any preceding example.

Example 15: An energy storage system comprising the computer system (130, 300) of any preceding example.

Example 16: A computer-implemented method (200) for determining a target operating temperature for a battery (120), the computer-implemented method (200) comprising: determining (202), by processing circuitry (302) of a computer system (130, 300), a first cost associated with a resistance of the battery (120); determining (204), by the processing circuitry (302), a second cost associated with a life expectancy of the battery (120); and determining (206), by the processing circuitry (302), a target operating temperature for the battery (120) such that a sum of the first and second costs is below a threshold; wherein the first cost comprises a third cost associated with one or more of increasing a discharge power of the battery (120) and decreasing a charging time of the battery (120).

Example 17: The computer-implemented method (200) of example 16, wherein the first cost comprises a fourth cost associated with energy efficiency associated with the battery (120).

Example 18: The computer-implemented method (200) of example 17, wherein the fourth cost comprises one or more of a fifth cost associated with energy losses associated with the battery (120) and a sixth cost associated with energy consumption of a cooling system associated with the battery (120).

Example 19: The computer-implemented method (200) of example 18, comprising determining, by the processing circuitry (302), the fifth cost by modelling energy losses associated with the battery (120) as a function of one or more of battery temperature and battery power.

Example 20: The computer-implemented method (200) of example 18 or 19 comprising determining, by the processing circuitry (302), the sixth cost by modelling energy consumption of the cooling system as a function of target battery temperature.

Example 21: The computer-implemented method (200) of example 19 or 20, comprising performing, by the processing circuitry (302), the modelling based on current operating conditions of one or more of the battery (120) and a vehicle (100) comprising the battery (120).

Example 22: The computer-implemented method (200) of any of examples 16 to 21, comprising determining, by the processing circuitry (302), the third cost by modelling the charging power $P_{chg}$ of the battery (120) as:

$$P_{chg} = v_{max} \frac{OCV - v_{max}}{R_{chg}}$$

where $OCV$ is the open circuit voltage of the battery (120), $v_{max}$ is a maximum voltage to which the battery can be charged, and $R_{chg}$ is the resistance during charging.

Example 23: The computer-implemented method (200) of any of examples 16 to 22, determining (204), by the processing circuitry (302), the third cost by modelling the discharging power $P_{dis}$ of the battery (120) as:

$$P_{dis} = v_{min} \frac{OCV - v_{min}}{R_{dis}}$$

where $OCV$ is the open circuit voltage of the battery (120), $v_{min}$ is a minimum voltage to which the battery can be discharged, and $R_{dis}$ is the resistance during discharging.

Example 24: The computer-implemented method (200) of any of examples 16 to 23, comprising determining, by the processing circuitry (302), the third cost by modelling at least one of the open circuit voltage of the battery (120) and the resistance of the battery (120) as a function of battery temperature and state of charge.

Example 25: The computer-implemented method (200) of any of examples 16 to 24, comprising determining, by the processing circuitry (302), the third cost by using test data for the resistance of the battery (120) as function of temperature and state of charge.

Example 26: The computer-implemented method (200) of any of examples 16 to 25, comprising determining, by the processing circuitry (302), the second cost by using test data for life expectancy of the battery (120) as a function of one or more of battery temperature and a present condition of the battery (120).

Example 27: The computer-implemented method (200) of any of examples 16 to 26, comprising determining, by the processing circuitry (302), the target operating temperature using model predictive control or an optimisation function.

Example 28: The computer-implemented method (200) of any of examples 16 to 27, comprising determining, by the processing circuitry (302), the target operating temperature by minimising the sum of the first and second costs.

Example 29: A computer program product comprising program code for performing, when executed by processing circuitry (302), the computer-implemented method (200) of examples 16 to 28.

Example 30: A non-transitory computer-readable storage medium comprising instructions, which when executed by processing circuitry (302), cause the processing circuitry to perform the computer-implemented method (200) of examples 16 to 28.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1.  A computer system (130, 300) for determining a target operating temperature for a battery (120), the computer system (130, 300) comprising processing circuitry (302) configured to:

    determine a first cost associated with a resistance of the battery (120);
    determine a second cost associated with a life expectancy of the battery (120); and
    determine a target operating temperature for the battery (120) such that a sum of the first and second costs is below a threshold;
    wherein the first cost comprises a third cost associated with one or more of increasing a discharge power of the battery (120) and decreasing a charging time of the battery (120).

2.  The computer system (130, 300) of claim 1, wherein the first cost comprises a fourth cost associated with energy efficiency associated with the battery (120).

3.  The computer system (130, 300) of claim 2, wherein the fourth cost comprises one or more of a fifth cost associated with energy losses associated with the battery (120) and a sixth cost associated with energy consumption of a cooling system associated with the battery (120).

4.  The computer system (130, 300) of claim 3, wherein the processing circuitry (302) is configured to determine the fifth cost by modelling energy losses associated with the battery (120) as a function of one or more of battery temperature and battery power and/or determine the sixth cost by modelling energy consumption of the cooling system as a function of target battery temperature.

5.  The computer system (130, 300) of any preceding claim, wherein the processing circuitry (302) is configured to determine the third cost by modelling the charging power $P_{chg}$ of the battery (120) as:

$$P_{chg} = v_{max} \frac{OCV - v_{max}}{R_{chg}}$$

    where $OCV$ is the open circuit voltage of the battery (120), $v_{max}$ is a maximum voltage to which the battery can be charged, and $R_{chg}$ is the resistance during charging.

6.  The computer system (130, 300) of any preceding claim, wherein the processing circuitry (302) is configured to determine the third cost by modelling the discharging power $P_{dis}$ of the battery (120) as:

$$P_{dis} = v_{min} \frac{OCV - v_{min}}{R_{dis}}$$

    where $OCV$ is the open circuit voltage of the battery (120), $v_{min}$ is a minimum voltage to which the battery can be discharged, and $R_{dis}$ is the resistance during discharging.

7.  The computer system (130, 300) of any preceding claim, wherein the processing circuitry (302) is configured to determine the third cost by modelling at least one of the open circuit voltage of the battery (120) and the resistance of the battery (120) as a function of battery temperature and state of charge.

8. The computer system (130, 300) of any preceding claim, wherein the processing circuitry (302) is configured to determine the third cost by using test data for the resistance of the battery (120) as function of temperature and state of charge.

9. The computer system (130, 300) of any preceding claim, wherein the processing circuitry (302) is configured to determine the second cost by using test data for life expectancy of the battery (120) as a function of one or more of battery temperature and a present condition of the battery (120).

10. The computer system (130, 300) of any preceding claim, wherein the processing circuitry (302) is configured to determine the target operating temperature using model predictive control or an optimisation function.

11. The computer system (130, 300) of any preceding claim, wherein the processing circuitry (302) is configured to determine the target operating temperature by minimising the sum of the first and second costs.

12. A vehicle (100) comprising the computer system (130, 300) of any preceding claim.

13. A computer-implemented method (200) for determining a target operating temperature for a battery (120), the computer-implemented method (200) comprising:

determining (202), by processing circuitry (302) of a computer system (130, 300), a first cost associated with a resistance of the battery (120);
determining (204), by the processing circuitry (302), a second cost associated with a life expectancy of the battery (120); and
determining (206), by the processing circuitry (302), a target operating temperature for the battery (120) such that a sum of the first and second costs is below a threshold;
wherein the first cost comprises a third cost associated with one or more of increasing a discharge power of the battery (120) and decreasing a charging time of the battery (120).

14. A computer program product comprising program code for performing, when executed by processing circuitry (302), the computer-implemented method (200) of claim 13.

15. A non-transitory computer-readable storage medium comprising instructions, which when executed by processing circuitry (302), cause the processing circuitry to perform the computer-implemented method (200) of claim 13.

**FIG. 1**

200

| Determining a first cost associated with a resistance of a battery, comprising a third cost associated with discharge power of the battery and/or a charging time of the battery |
| --- |

202

| Determining a second cost associated with a life expectancy of the battery |
| --- |

204

| Determining a target operating temperature for the battery such that a sum of the first and second costs is below a threshold |
| --- |

206

**FIG. 2**

**FIG. 3**

**EUROPEAN SEARCH REPORT**

Application Number

EP 25 18 7508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2013 224076 A1 (SIEMENS AG [DE]) 28 May 2015 (2015-05-28) * figures 1-5 * * pages 40-69 * | 1-15 | INV. B60L58/24 B60L58/26 H01M10/60 H01M10/613 |
| X | KIM JONGHO ET AL: "Optimal Operation of a Plug-in Hybrid Vehicle with Battery Thermal and Degradation Model", 2020 AMERICAN CONTROL CONFERENCE (ACC), AACC, 1 July 2020 (2020-07-01), pages 3083-3090, XP033796920, DOI: 10.23919/ACC45564.2020.9147345 * the whole document * | 1-15 | H01M10/625 H01M10/633 |
| X | CN 118 231 883 A (INNER MONGOLIA ZHONGDIAN ENERGY STORAGE TECH CO LTD) 21 June 2024 (2024-06-21) * figures 1,2 * * paragraphs [0020] - [0030] * | 1-15 | |
| A | US 2016/107526 A1 (JIN ZHIHONG H [US] ET AL) 21 April 2016 (2016-04-21) * figure 18 * * paragraphs [0156] - [0162] * | 1-15 | TECHNICAL FIELDS SEARCHED (IPC) B60L H01M |
| A | US 2022/149645 A1 (RAMANUJAM MURALIKRISHNAN [IN] ET AL) 12 May 2022 (2022-05-12) * figures 1-5 * | 1-15 | |

The present search report has been drawn up for all claims

| Place of search | Date of completion of the search | Examiner |
|---|---|---|
| The Hague | 3 November 2025 | Gücin, Taha |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 7508

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | Publication date | Patent family member(s) | Publication date |
|---|---|---|---|
| DE 102013224076 A1 | 28-05-2015 | DE 102013224076 A1 | 28-05-2015 |
|  |  | WO 2015078652 A1 | 04-06-2015 |
| CN 118231883 A | 21-06-2024 | NONE |  |
| US 2016107526 A1 | 21-04-2016 | CN 107000599 A | 01-08-2017 |
|  |  | CN 110562042 A | 13-12-2019 |
|  |  | EP 3206905 A1 | 23-08-2017 |
|  |  | US 2016107526 A1 | 21-04-2016 |
|  |  | US 2019047421 A1 | 14-02-2019 |
|  |  | US 2021309111 A1 | 07-10-2021 |
|  |  | WO 2016061034 A1 | 21-04-2016 |
| US 2022149645 A1 | 12-05-2022 | EP 3995346 A1 | 11-05-2022 |
|  |  | US 2022149645 A1 | 12-05-2022 |

EPO FORM P0459

For more details about this annex : see Official Journal of the European Patent Office, No. 12/82